# EUROPÄISCHE PATENTSCHRIFT

(11) **EP 4 186 829 B1**
(45) Veröffentlichungstag und Bekanntmachung des Hinweises auf die Patenterteilung: **27.08.2025**
(21) Anmeldenummer: 22202249.3
(22) Anmeldetag: 18.10.2022
(51) Int. Cl.: B65G 47/08

(54) **GREIFVORRICHTUNG UND VERFAHREN ZUR HANDHABUNG VON STÜCKGÜTERN**
GRIPPING DEVICE AND METHOD FOR HANDLING PIECE GOODS
DISPOSITIF DE PRÉHENSION ET PROCÉDÉ DE MANIPULATION DE MARCHANDISES DE DÉTAIL

(30) Priorität: 26.11.2021 DE 102021131120
(43) Veröffentlichungstag der Anmeldung: 31.05.2023
(73) Patentinhaber: KRONES Aktiengesellschaft, 93073 Neutraubling (DE)
(72) Erfinder: UNTERSEHER, Josef, 93073 Neutraubling (DE); HARTL, Michael, 93073 Neutraubling (DE)
(74) Vertreter: Benninger, Johannes

(56) Entgegenhaltungen:
- EP-A1- 3 205 609
- EP-A1- 3 431 422
- EP-A1- 4 067 271
- CN-B- 103 042 534
- US-A1- 2020 180 878

## Beschreibung

Die vorliegende Erfindung betrifft eine Greifvorrichtung und ein Verfahren zur Handhabung von Stückgütern.

Um Stückgüter im Bereich der Pack- und Palettiertechnik in eine relative Anordnung bringen zu können, die sich zum Bilden einer palettierfähigen Lage eignet, sind aus dem Stand der Technik bereits Greifer bekannt, welche über mehrere zum klemmenden Erfassen von Stückgütern vorgesehene Leisten verfügen. Diese Leisten bzw. Klemmleisten können bei bereits bekannten Greifern eine Zustellbewegung ausführen, wodurch Stückgüter zwischen den Leisten kraftbeaufschlagt gehalten werden und der Greifer sodann die gehaltenen Stückgüter drehen und/oder gegenüber weiteren Stückgütern verschieben kann. Nach einem Drehen und/oder Verschieben können die Leisten geöffnet werden bzw. ihren relativen Abstand zueinander vergrößern, wodurch die bis dahin klemmend gehaltenen Stückgüter wieder freigegeben werden.

Bei den Stückgütern kann es sich beispielsweise um Gebinde mit mehreren Getränkebehältern handeln, so dass ein entsprechender Greifer solche Gebinde entgegennehmen und hierauf bedarfsweise drehen bzw. verschieben kann. Bekannt sind beispielsweise Gebinde, bei welchen mehrere Getränkebehälter mittels einer Umreifung und/oder einer Banderole zusammengehalten werden. Darüber hinaus existieren Gebinde, bei welchen Artikel über ein sogenanntes Tray zusammengehalten werden, auf welchem mehrere Getränkebehälter aufstehen und welches Tray seitliche Laschen besitzt, die in eine aufrechte Orientierung überführt wurden. Auch sind seit einiger Zeit Gebinde bekannt, bei welchen Getränkebehälter über einen flächigen Verpackungszuschnitt zusammengehalten werden, der in Richtung von oben kommend auf die jeweiligen Getränkebehälter aufgesteckt wurde. Solche in der Praxis als Top-Clips bezeichneten Verpackungszuschnitte können aus Karton und/oder Pappe gebildet sein.

Ein beschriebener Greifer, welcher Stückgüter entgegennimmt und sodann manipuliert, kann an einem Portalsystem aufgehängt oder als Bestandteil eines Portalsystems ausgebildet sein. Unterhalb des Portalsystems kann sich eine Horizontalfördereinrichtung befinden, welche Stückgüter bzw. Gebinde in mehreren parallelen Reihen transportiert. Ein solcher Transport in mehreren parallelen Reihen hat den Vorteil, dass Stückgüter bzw. Gebinde mit hohem Durchsatz transportiert und mittels eines Greifers manipuliert werden können. Auch sind bereits Ausführungsformen bekannt, bei welchen Greifer zur Manipulation von Stückgütern bzw. Gebinden an Mehrachsroboterarmen angeordnet sind bzw. von Mehrachsrobotern getragen werden.

Eine solche Greifvorrichtung ist beispielsweise aus der EP 2 388 216 A1 bekannt. Diese dort offenbarte Greifvorrichtung besitzt zwei sich gegenüberliegende Greifmittel, die zum Entgegennehmen von Stückgütern zugestellt werden können. Setzt die Greifvorrichtung ungewollt auf eine Bodenfläche auf, so können sich die zwei gegenüberliegenden Greifmittel von einem Träger lösen, womit Beschädigungen der Greifvorrichtung entgegengewirkt werden kann.

Eine weitere solche Greifvorrichtung ist beispielsweise aus der DE 102 04 513 A1 bekannt. Die in der DE-Anmeldung offenbarte Greifvorrichtung umfasst zwei Greifarme zum Greifen von Gegenständen. Einer der beiden Greifarme ist mit einem Fahrzeug verbindbar. Der weitere Greifarm dient zum Öffnen und Schließen der Greifvorrichtung über ein Stellglied.

Die EP 3 431 422 A1 offenbart zudem eine zum Entgegennehmen von Stückgütern vorgesehene Klemm- und/oder Greifeinrichtung für einen Manipulator. Die Klemm- und/oder Greifeinrichtung umfasst mehrere jeweils hängend angeordnete Klemm- und/oder Greifelemente, welche zum temporären Entgegennehmen von Stückgütern aus unterschiedlichen parallelen Reihen ausgebildet sind. Die Klemm- und/oder Greifelemente können hierbei paarweise zugestellt werden, um Stückgüter einer jeweiligen Reihe mittels eines jeweiligen Paares an Klemm- und/oder Greifelementen temporär zu erfassen. Die EP 3 205 609 A1 beschreibt Vorrichtung und Verfahren zum Manipulieren von Stückgütern, bei welchen einzelne Stückgüter mittels mindestens einer an der Manipulationsvorrichtung angeordneten Greifeinrichtung aus einem, auf einer Horizontalfördereinrichtung zugeführten, Stückgutstrom erfasst und an eine von zwei unterschiedlichen, von einer Steuerungseinrichtung vorgegebenen Positionen verschoben werden können. Die EP 3 205 609 A1 offenbart ein Verfahren gemäß dem Oberbegriff des Anspruchs 1 und eine Greifvorrichtung gemäß dem Oberbegriff des Anspruchs 6.

Bei solchen aus dem Stand der Technik bekannten Greifvorrichtungen kann es erforderlich sein, dass die Greifer jeweils gewechselt werden, wenn sich Umstände in der jeweiligen Bereitstellung der Stückgüter ändern. So kann es beispielsweise sein, dass Stückgüter zunächst entlang einer Reihe bewegt werden, über die Greifvorrichtung hierbei erfasst und sodann manipuliert werden. Zu einem späteren Zeitpunkt kann es sein, dass der Greifvorrichtung Stückgüter in mehreren parallelen Reihen oder in einer alternativen Anordnung bereitgestellt werden, wobei die Stückgüter wiederum über die Greifvorrichtung erfasst uns sodann manipuliert werden. Sofern ein Austausch oder ein Wechsel von Greifern notwendig ist, muss die Manipulation von Stückgütern bis zur Anpassung der Greifvorrichtung unterbrochen werden. Zudem ist eine solche Anpassung einer Greifvorrichtung umständlich und erfolgt häufig unter Zuhilfenahme eines Benutzers. Wünschenswert wären Greifvorrichtungen, welche sich einfach und schnell an unterschiedliche Arten einer Bereitstellung von Stückgütern anpassen lassen.

Eine Aufgabe der Erfindung kann aus diesem Grunde darin gesehen werden, eine entsprechende Möglichkeit bereitzustellen, mit welcher eine Greifvorrichtung einfach und unkompliziert auf unterschiedliche Arten einer jeweiligen Bereitstellung von Stückgütern angepasst werden kann.

Die obige Aufgabe wird durch die Gegenstände gelöst, welche die Merkmale in den unabhängigen Ansprüchen umfassen. Weitere vorteilhafte Ausgestaltungen werden durch die Unteransprüche beschrieben.

Die Erfindung betrifft ein Verfahren zur Handhabung von Stückgütern mit einer Greifvorrichtung, welche mindestens drei Greiferleisten besitzt. Die Stückgüter können durch Getränkebehälter oder durch Gebinde mit jeweils mehreren Getränkebehältern ausgebildet sein. Die Getränkebehälter bzw. die mehreren Getränkebehälter eines jeweiligen Gebindes können durch Getränkeflaschen und/oder durch Getränkedosen ausgebildet sein.

Es kann sein, dass die Greifvorrichtung genau drei Greiferleisten besitzt. Bewährt haben sich in der Praxis Ausführungsformen, bei welchen die Greifvorrichtung genau vier Greiferleisten besitzt. Auch kann es sein, dass Greifvorrichtungen in diversen Ausführungsformen mehr als vier Greiferleisten umfassen.

Ein Schritt des Verfahrens sieht ein Bereitstellen von Stückgütern über mindestens eine Horizontalfördereinrichtung vor. Die mindestens eine Horizontalfördereinrichtung kann ein umlaufend angetriebenes Transportband umfassen, auf welchem die Stückgüter aufstehen.

Weiter ist für das erfindungsgemäße Verfahren eine klemmende Entgegennahme jeweils mindestens eines bereitgestellten Stückgutes über mindestens ein aus zwei Greiferleisten gebildetes Greiferleistenpaar der Greifvorrichtung vorgesehen und ein Manipulieren des jeweiligen klemmend entgegengenommenen mindestens einen Stückgutes durch die Greifvorrichtung.

Es ist vorgesehen, dass einer Steuereinrichtung Informationen zur Bereitstellung der Stückgüter vorgegeben werden und die Steuereinrichtung unter Berücksichtigung der Informationen eine bestimmte Anzahl, welche mindestens ein aus zwei Greiferleisten gebildetes Greiferleistenpaar zahlenmäßig definiert, festlegt.

Weiter ist vorgesehen, dass die Greifvorrichtung hierauf über die Steuereinrichtung angesteuert wird und hierbei über ein jeweiliges aus zwei Greiferleisten gebildetes Greiferleistenpaar gemäß der zahlenmäßig definierten Anzahl jeweils mindestens ein bereitgestelltes Stückgut entgegennimmt und das über das jeweilige aus zwei Greiferleisten gebildete Greiferlerleistenpaar jeweils entgegengenommene mindestens eine Stückgut hierauf manipuliert.

Da die Steuereinrichtung somit eine Anzahl an Greiferleistenpaaren unter Berücksichtigung der bereitgestellten Stückgüter festlegen kann, sind keine Umrüstarbeiten notwendig, sofern sich eine jeweilige Art der Bereitstellung an Stückgütern ändert. Die Steuereinrichtung ist somit in der Lage, Greiferleistenpaare mit unterschiedlicher Anzahl zu bilden und Stückgüter mit einer auf die Bereitstellung abgestimmten Anzahl an Greiferleistenpaaren entsprechend zu manipulieren.

Es kann sein, dass über ein jeweiliges aus zwei Greiferleisten gebildetes Greiferleistenpaar gemäß der zahlenmäßig definierten Anzahl das jeweilige mindestens eine entgegengenommene Stückgut manipuliert und hierdurch in eine relative Ausrichtung gegenüber weiteren bereits manipulierten Stückgütern gebracht wird, welche auf eine aus manipulierten Stückgütern zu bildende palettierfähige Lage abgestimmt ist. Hierbei kann es sein, dass der jeweilige klemmend entgegengenommene mindestens eine Stückgut bedarfsweise gedreht und/oder schräg oder senkrecht zu einer Transportrichtung der mindestens einen Horizontalfördereinrichtung versetzt wird.

In der Praxis haben sich Ausführungsformen bewährt, bei welchen der Steuereinrichtung über eine Sensorik Informationen zur Bereitstellung der Stückgüter vorgegeben werden, mit welcher Sensorik die Steuereinrichtung in Verbindung steht und deren Erfassungsbereich sich im Bereich der mindestens einen Horizontalfördereinrichtung befindet. Die Sensorik kann beispielsweise durch ein Kamerasystem ausgebildet sein. Auch kann es sein, dass die Steuereinrichtung über ein Bedienfeld verfügt oder mit einem Bedienfeld in Verbindung steht, über welches Bedienfeld ein Benutzer der Steuereinrichtung Informationen zur Bereitstellung der Stückgüter vorgibt.

Die Greifvorrichtung kann als Bestandteil eines Portalsystems ausgebildet sein oder über ein Portalsystem geführt werden. Auch kann es sein, dass die Greifvorrichtung von einem Knickarmroboter getragen und in Richtung jeweilige Stückgüter bewegt wird, welche der Greifvorrichtung über die mindestens eine Horizontalfördereinrichtung bereitgestellt werden.

Erfindungsgemäß werden die Stückgüter der Greifvorrichtung über die mindestens eine Horizontalfördereinrichtung wahlweise in einer Reihe oder in mehreren parallelen Reihen bereitgestellt und werden der Steuereinrichtung Informationen zur jeweiligen Reihenanzahl vorgegeben, woraufhin die Steuereinrichtung eine Anzahl, welche mindestens ein aus zwei Greiferleisten gebildetes Greiferleistenpaar zahlenmäßig definiert, identisch zur vorgegebenen Reihenanzahl festlegt.

Somit kann es sein, dass Stückgüter der Greifvorrichtung über die mindestens eine Horizontalfördereinrichtung zunächst in genau einer Reihe bereitgestellt werden und der Steuereinrichtung Informationen vorgegeben werden, wonach die Bereitstellung an Stückgütern in genau einer Reihe erfolgt. Die Steuereinrichtung kann hierauf zahlenmäßig ein einzelnes Greiferleistenpaar definieren bzw. zahlenmäßig lediglich ein einzelnes Greiferleistenpaar definieren, woraufhin das eine einzelne Greiferleistenpaar bzw. lediglich das eine einzelne Greiferleistenpaar jeweils mindestens ein bereitgestelltes Stückgut entgegennimmt und hierauf manipuliert und wobei wenigstens eine nicht zum klemmenden Entgegennehmen von Stückgütern benötigte Greiferleiste hierbei in einer Warteposition an der Greifvorrichtung verweilt.

Weiter kann es sein, dass Stückgüter der Greifvorrichtung nachfolgend oder zu einem beliebigen bestimmten Zeitpunkt über die mindestens eine Horizontalfördereinrichtung in genau zwei parallelen Reihen bereitgestellt werden und der Steuereinrichtung Informationen vorgegeben werden, wonach die Bereitstellung an Stückgütern in genau zwei parallelen Reihen erfolgt. Die Steuereinrichtung kann hierauf zahlenmäßig genau zwei Greiferleistenpaare definieren, woraufhin die genau zwei Greiferleistenpaare jeweils mindestens ein bereitgestelltes Stückgut einer jeweiligen Reihe entgegennehmen und hierauf manipulieren. Auch hierbei kann es ggf. sein, dass wenigstens eine Greiferleiste, welche zum klemmenden Entgegennehmen von Stückgütern der genau zwei parallelen Reihen nicht benötigt wird, hierbei in einer Warteposition an der Greifvorrichtung verweilt.

Weiter kann es sein, dass Stückgüter der Greifvorrichtung nachfolgend oder zu einem weiteren beliebigen bestimmten Zeitpunkt über die mindestens eine Horizontalfördereinrichtung in genau drei parallelen Reihen bereitgestellt werden und der Steuereinrichtung Informationen vorgegeben werden, wonach die Bereitstellung an Stückgütern in genau drei parallelen Reihen erfolgt. Die Steuereinrichtung kann hierauf zahlenmäßig genau drei Greiferleistenpaare definieren, woraufhin die genau drei Greiferleistenpaare jeweils mindestens ein bereitgestelltes Stückgut der genau drei parallelen Reihen entgegennehmen und hierauf manipulieren. Auch hierbei kann es ggf. sein, dass wenigstens eine Greiferleiste, welche zum klemmenden Entgegennehmen von Stückgütern der genau drei parallelen Reihen nicht benötigt wird, hierbei in einer Warteposition an der Greifvorrichtung verweilt. Alternativ hierzu kann es sein, dass die Steuereinrichtung zahlenmäßig genau drei Greiferleistenpaare definiert und die genau drei Greiferleistenpaare mittels sämtlicher Greiferleisten bereitgestellt werden, welches als Bestandteil der Greifvorrichtung ausgebildet sind.

Weiter kann es sein, dass die Steuereinrichtung in Abstimmung auf die festgelegte Anzahl für ein jeweiliges Greiferleistenpaar eine definierte Zusammenstellung aus mehreren unterschiedlichen Zusammenstellungen an Greiferleistenpaaren auswählt und mit dem mindestens einen Greiferleistenpaar gemäß der ausgewählten Zusammenstellung und der bestimmten Anzahl das jeweilige mindestens eine Stückgut klemmend erfasst und hierauf manipuliert. Denkbar ist hierbei, dass im Rahmen einer ersten Zusammenstellung eine erste Greiferleiste der Greifvorrichtung mit einer zweiten Greiferleiste der Greifvorrichtung ein Greiferleistenpaar ausgebildet. Im Rahmen einer zweiten Zusammenstellung kann diese erste Greiferleiste jedoch mit einer dritten Greiferleiste der Greifvorrichtung ein jeweiliges Greiferleistenpaar ausbilden.

Erfindungsgemäß wählt die Steuereinrichtung in diversen Ausführungsformen bei einer Reihenanzahl n≥2 für ein erstes Greiferleistenpaar und ein zweites Greiferleistenpaar eine bestimmte gemeinsame Greiferleiste aus und legt die eine bestimmte gemeinsame Greiferleiste mit einer ersten Greiferleiste als erste Greiferleistenpaar fest sowie die bestimmte gemeinsame Greiferleiste mit einer weiteren zweiten Greiferleiste als zweites Greiferleistenpaar fest.

Auch kann es sein, dass jeder Greiferleiste der mindestens drei Greiferleisten ein eigener Aktor zugeordnet ist. Hierbei kann es sein, dass eine Greiferleiste oder mehrere Greiferleisten zur klemmenden Entgegennahme des jeweiligen mindestens einen Stückgutes über ihren jeweiligen eigenen Aktor bewegt werden. Alternativ oder ergänzend hierzu kann es sein, dass eine Greiferleiste oder mehrere Greiferleisten über ihren jeweiligen eigenen Aktor in eine jeweilige Position bewegt werden, in welcher die jeweilige Greiferleiste mit einer weiteren Greiferleiste ein jeweiliges Greiferleistenpaar ausbildet.

Der jeweilige eigene Aktor kann beispielsweise durch einen elektromagnetischen Direktantrieb ausgebildet sein. Bewährt haben sich auch Ausführungsformen, bei welchen die eigenen Aktoren jeweils als Linearmotoren ausgebildet sind. Die Erfindung ist jedoch nicht auf solche Ausführungsformen beschränkt, so dass darüber hinaus weitere Antrieb existieren, mit welchen die Greiferleisten der Greifvorrichtung bewegt werden können.

Weiter kann es sein, dass einem jeweiligen Greiferleistenpaar jeweils ein eigener Aktor zugeordnet wird, welcher zur Entgegennahme des jeweiligen mindestens einen bereitgestellten Stückgutes über eine jeweilige Kette und/oder über einen jeweiligen Riemen eine Zustellbewegung auf die jeweiligen zwei Greiferleisten des jeweiligen Greiferleistenpaares überträgt.

Die Erfindung betrifft zudem eine Greifvorrichtung zur Handhabung von Stückgütern. Die Greifvorrichtung kann zur Durchführung der vorherig beschriebenen Ausführungsformen des erfindungsgemäßen Verfahrens ausgebildet bzw. hierzu vorbereitet sein. Zudem können einzelne Schritte der Ausführungsformen des vorhergehend bereits beschriebenen Verfahrens ggf. durch die Ausführungsformen der nachfolgend beschriebenen Greifvorrichtung durchgeführt bzw. umgesetzt werden.

Die Greifvorrichtung umfasst mindestens drei Greiferleisten, von welchen ein jeweiliges aus zwei Greiferleisten gebildetes Greiferleistenpaar zur jeweiligen klemmenden Entgegennahme jeweils mindestens eines Stückgutes ausgebildet ist.

Weiter umfasst die Greifvorrichtung eine Steuereinrichtung, welcher Informationen zu einer für die Greifvorrichtung vorgesehenen Bereitstellung von Stückgütern vorgebbar sind. Es ist vorgesehen, dass die Steuereinrichtung unter Berücksichtigung der Informationen zum Festlegen einer bestimmten Anzahl ausgebildet ist, welche bestimmte Anzahl mindestens ein aus zwei Greiferleisten gebildetes Greiferleistenpaar zahlenmäßig definiert. Weiter ist vorgesehen, dass über die Steuereinrichtung das mindestens eine aus zwei Greiferleisten gebildete Greiferleistenpaar gemäß der zahlenmäßig definierten Anzahl zur klemmenden Entgegennahme des jeweiligen mindestens einen Stückgutes betätigbar ist.

Erfindungsgemäß sind die Stückgüter der Greifvorrichtung wahlweise in einer Reihe oder in mehreren parallelen Reihen bereitstellbar. Erfindungsgemäß sind Informationen der Steuereinrichtung zur Reihenanzahl vorgebbar, wobei die Steuereinrichtung derart zum Festlegen der bestimmten Anzahl ausgebildet ist, dass die bestimmte Anzahl, welche mindestens ein aus zwei Greiferleisten gebildetes Greiferleistenpaar zahlenmäßig definiert, der jeweiligen Reihenanzahl entspricht.

Auch kann es sein, dass mittels der Steuereinrichtung in Abhängigkeit der bestimmten Anzahl, welche mindestens ein aus zwei Greiferleisten gebildetes Greiferleistenpaar zahlenmäßig definiert, eine jeweilige definierte Zusammenstellung aus mehreren unterschiedlichen Zusammenstellungen an Greiferleistenpaarungen auswählbar ist, wobei das jeweilige Greiferleistenpaar gemäß der definierten Zusammenstellung zur klemmenden Entgegennahme des jeweiligen mindestens einen Stückgutes ausgebildet ist.

Erfindungsgemäß ist die Steuereinrichtung derart ausgebildet, dass die Steuereinrichtung bei einer Reihenanzahl n≥2 eine bestimmte Greiferleiste einem ersten Greiferleistenpaar und einem zweiten Greiferleistenpaar gemeinsame zuordnen kann.

Weiter kann es sein, dass jede Greiferleiste der mindestens drei Greiferleisten ein eigener Aktor zugeordnet ist, wobei der jeweilige eigene Aktor mit der Steuereinrichtung in Verbindung steht. Hierbei kann es sein, dass ein eigener Aktor oder mehrere eigene Aktoren über die Steuereinrichtung zur jeweiligen klemmenden Entgegennahme des jeweiligen mindestens einen Stückgutes über die jeweilige Greiferleiste ansteuerbar sind und/oder dass ein eigener Aktor oder mehrere eigene Aktoren über die Steuereinrichtung zur Bewegung der jeweiligen Greiferleiste in eine jeweilige Position ansteuerbar sind, in welcher die jeweilige Greiferleiste mit einer weiteren Greiferleiste ein jeweiliges Greiferleistenpaar ausbildet.

Auch kann es sein, dass einem jeweiligen Greiferleistenpaar ein jeweiliger eigener Aktor zugeordnet ist, über welchen jeweiligen eigenen Aktor eine Kette und/oder ein Riemen umlaufend antreibbar ist. Hierbei kann es sein, dass die jeweiligen zwei Greiferleisten des jeweiligen Greiferleistenpaares derart an der Kette und/oder an dem Riemen angeordnet sind, dass die jeweiligen zwei Greiferleisten bei einem umlaufenden Antrieb der jeweiligen Kette und/oder des jeweiligen Riemens über den jeweiligen eigenen Aktor eine Zustellbewegung zur klemmenden Entgegennahme des jeweiligen mindestens einen Stückgutes ausführen können.

Bewährt hat es sich auch, wenn die Greifvorrichtung zum Manipulieren und Überführen eines jeweiligen klemmend entgegengenommenen Stückgutes in eine relative Ausrichtung gegenüber weiteren bereits manipulierten Stückgütern ausgebildet ist, welche relative Ausrichtung auf eine aus manipulierten Stückgütern zu bildende palettierfähige Lage abgestimmt ist.

Die Erfindung betrifft zudem eine Transport- und Manipulationsstrecke für Stückgüter und umfasst eine Greifvorrichtung gemäß einem Ausführungsbeispiel der voranstehenden Beschreibung.

Weiter umfasst die Transport- und Manipulationsstrecke eine Horizontalfördereinrichtung, über welche der Greifvorrichtung in mindestens einer Reihe hintereinander bewegte Stückgüter bereitstellbar sind. Es ist vorgesehen, dass die Greifvorrichtung über ihre Steuer- und/oder Regeleinrichtung zum Drehen von klemmend erfassten Stückgütern und/oder zum Versetzen von klemmend erfassten Stückgütern auf der Horizontalfördereinrichtung ansteuerbar ist.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Es sei an dieser Stelle ausdrücklich erwähnt, dass alle Aspekte und Ausführungsvarianten, die im Zusammenhang mit der erfindungsgemäßen Greifvorrichtung erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Greifvorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die in Zusammenhang mit dem erfindungsgemäßen Verfahren erläutert wurden, gleichermaßen Teilaspekte der erfindungsgemäßen Greifvorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Greifvorrichtung.

Figuren 1 bis 3 zeigen jeweils eine schematische Ansicht einer Ausführungsform einer erfindungsgemäßen Greifvorrichtung und verdeutlichen einzelne Schritte, wie sie bei diversen Ausführungsformen des erfindungsgemäßen Verfahrens vorgesehen sein können.

Fig. 4 zeigt weitere Aspekte, wie sie bei diversen Ausführungsformen der erfindungsgemäßen Greifvorrichtung und bei der Umsetzung in diversen Ausführungsformen des erfindungsgemäßen Verfahrens vorgesehen sein können.

Fig. 5 zeigt im Flussdiagramm Schritte, wie sie einzeln oder gemäß der in Fig. 5 dargestellten Kombination in diversen Ausführungsformen des erfindungsgemäßen Verfahrens vorgesehen sein können.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

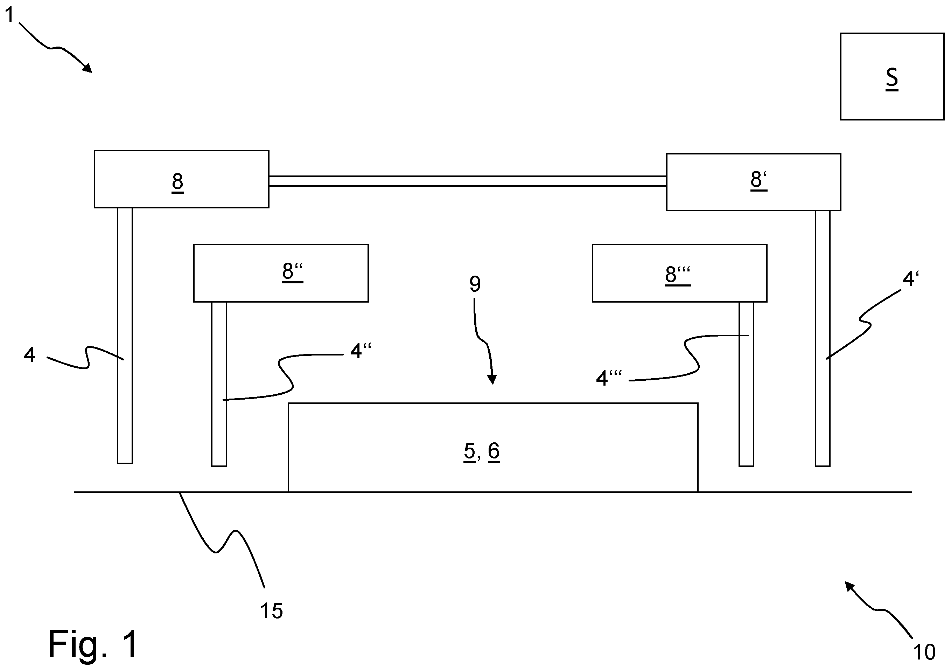

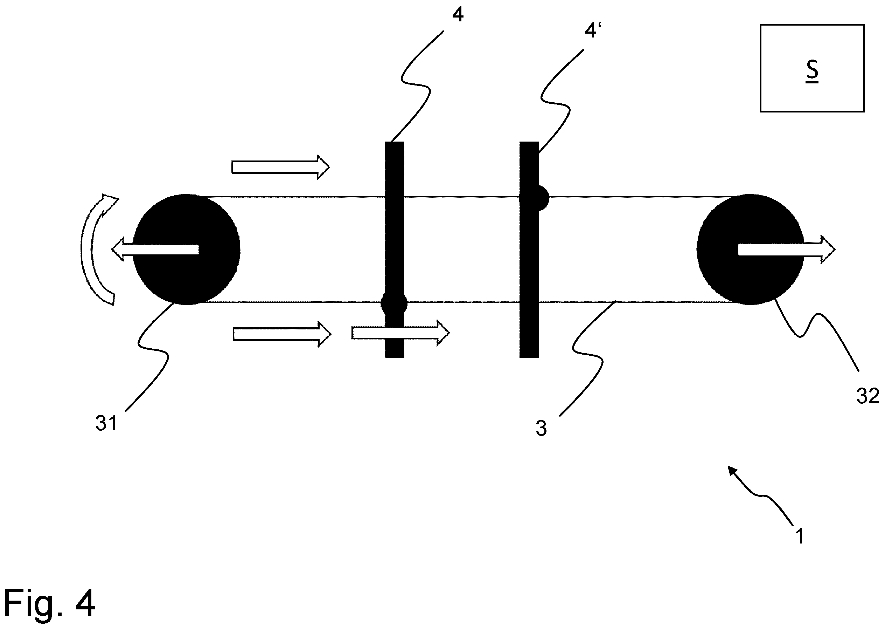

Die Figuren 1 bis 3 zeigen jeweils eine schematische Ansicht einer Ausführungsform einer erfindungsgemäßen Greifvorrichtung 1 und verdeutlichen einzelne Schritte, wie sie bei diversen Ausführungsformen des erfindungsgemäßen Verfahrens 100 (vgl. Fig. 4) vorgesehen sein können. Die Greifvorrichtung 1 und die in Figuren 1 bis 3 jeweils auf Verweis mit Ziffer 15 dargestellte Horizontalfördereinrichtung sind Bestandteil einer Transport- und Manipulationsstrecke 10. Mittels der Transport- und Manipulationsstrecke 10 werden die Stückgüter 5 nach einer Manipulation über die Greifvorrichtung 1 in Richtung einer Palettierstation bewegt.

Entlang der Transport- und Manipulationsstrecke 10 werden in Fig. 1 mehrere Stückgüter 5 hintereinander als Reihe 9 durch die Horizontalfördereinrichtung 15 in Richtung der Bildebene gefördert. Um Stückgüter 5 zu einem späteren Zeitpunkt palettieren zu können, ist es erforderlich, dass die Stückgüter 5 vorhergehend relativ zueinander ausgerichtet werden, um hierdurch aus mehreren Stückgütern 5 eine palettierfähige Lage zu bilden, die mittels geeigneter Handhabungseinrichtungen sodann auf einer zugeordneten Palette abgesetzt wird.

Die Greifvorrichtung 1 ist dazu in der Lage, die mittels der Horizontalfördereinrichtung 15 als Reihe 9 hintereinander bewegten Stückgüter 5 klemmend zu erfassen und bedarfsweise zu drehen und/oder schräg zur Transportrichtung der Horizontalfördereinrichtung 15 zu versetzen, um aus den Stückgütern 5 eine relative Ausrichtung zu erzeugen, die sich für eine solche palettierfähige Lage eignet. Sofern die Greifvorrichtung 1 eine solche Ausrichtung vorgenommen hat, werden die Stückgüter 5 zu einem späteren Zeitpunkt gegeneinander geschoben bzw. verdichtet, wodurch die palettierfähige Lage entsteht. Im Ausführungsbeispiel nach Figuren 1 bis 3 ist die Greifvorrichtung 1 als Bestandteil eines Portalsystems ausgebildet. Die Greifvorrichtung 1 selbst kann daher ebenso in Richtung der Bildebene und in Gegenrichtung der Bildebene bewegt werden.

Um die Stückgüter 5, die vorliegend durch Gebinde 6 mit jeweils mehreren Getränkebehältern ausgebildet sind, manipulieren zu können, umfasst die Greifvorrichtung 1 vier Greiferleisten 4, 4', 4" und 4‴. Die vier Greiferleisten 4, 4', 4" und 4‴ sind derart angeordnet, dass die vier Greiferleisten 4, 4', 4" und 4‴ senkrecht zur Transportrichtung der Horizontalfördereinrichtung 15 miteinander fluchten. In den Figuren 1 bis 3 sind die Greiferleisten 4, 4', 4" und 4‴ lediglich schematisch dargestellt. In der Praxis können die vier Greiferleisten 4, 4', 4" und 4‴ in einem jeweiligen Bereich, welcher den Stückgütern 5 zugewandt ist, durch Gummi ausgebildete Kontaktelemente besitzen, um Stückgüter 5 bei einer klemmenden Entgegennahme nicht zu beschädigen.

Jeder der vorliegend vier Greiferleisten 4, 4', 4" und 4‴ ist ein eigener Aktor 8, 8', 8" bzw. 8‴ zugeordnet, wobei die Aktoren 8, 8', 8", 8‴ wiederum mit der Steuereinrichtung S in Verbindung stehen. Die Aktoren 8, 8, 8" und 8‴ sind durch Linearmotoren ausgebildet, können jedoch in weiteren Ausführungsformen auch durch alternative Antriebe ausgebildet sein. Über ihren jeweiligen eigenen Aktor 8, 8', 8" und 8‴ kann eine jeweilige Greiferleiste 4, 4', 4", 4‴ entlang einer linearen Richtung bewegt werden, welche senkrecht zur Transportrichtung der Horizontalfördereinrichtung 15 verläuft.

Werden Stückgüter 5 über die Horizontalfördereinrichtung 15 in lediglich einer Reihe 9 bewegt und derart der Greifvorrichtung 1 bereitgestellt, so benötigt die Greifvorrichtung 1 lediglich ein aus genau zwei Greiferleisten 4, 4' 4" bzw. 4‴ gebildetes Greiferleistenpaar um jeweils mindestens ein Stückgut 5 der einen Reihe 9 klemmend entgegennehmen zu können und das klemmend entgegengenommene Stückgut 5 hierauf zu manipulieren. Das Greiferleistenpaar, welches zur klemmenden Entgegennahme des jeweiligen mindestens einen Stückgutes 5 benötigt wird, ist in Fig. 1 durch die Greiferleisten gebildet, auf welche mit Ziffern 4" und 4‴ verwiesen wird. Darüber hinaus umfasst die Greifvorrichtung 1 zwei weitere Greiferleisten, die in Fig. 1 auf Verweis mit Ziffern 4 und 4' dargestellt sind und jeweils nicht benötigt werden, sofern die Horizontalfördereinrichtung 15 der Greifvorrichtung 1 Stückgüter 5 in lediglich einer Reihe bereitstellt.

Wie vorhergehend bereits erwähnt wurde, ist diesen Greiferleisten 4" und 4‴, welche vorliegend zur klemmenden Erfassung von Stückgütern 5 der einen Reihe 9 vorgesehen sind, jeweils ein eigener Aktor 8" bzw. 8‴ zugeordnet. Sofern jeweils mindestens ein Stückgut 5 der einen Reihe 9 klemmend entgegengenommen werden soll, werden die eigenen Aktoren 8" und 8‴ von der Steuereinrichtung S angesteuert, welche die Greiferleisten 4" bzw. 4‴ in Richtung des jeweiligen Stückgutes 5 der einen Reihe 9 bewegen, bis das jeweilige mindestens eine Stückgut 5 klemmend zwischen den Greiferleisten 4" und 4‴ gehalten wird. Die Bewegung der Greiferleisten 4" und 4‴ erfolgt zumindest näherungsweise zeitgleich, so dass die Greiferleisten 4" und 4‴ auch zumindest näherungsweise zeitgleich mit dem mindestens einen Stückgut 5 der einen Reihe 9 in Oberflächenkontakt gelangen.

Die gesamte Greifvorrichtung 1 kann während der klemmenden Entgegennahme des jeweiligen mindestens einen Stückgutes 5 der einen Reihe 9 entlang der Transportrichtung der Horizontalfördereinrichtung 15 bewegt werden, welche in Richtung der Bildebene orientiert ist. Somit kann die Greifvorrichtung 1 während einer klemmenden Entgegennahme des mindestens einen Stückgutes 5 der einen Reihe 9 zusammen mit dem mindestens einen Stückgut 5 mitbewegt werden, bis das jeweilige mindestens eine Stückgut 5 von der Greifvorrichtung 1 bzw. von den Greiferleisten 4" und 4‴ klemmend erfasst wurde Sodann kann die Steuereinrichtung S eine Drehbewegung oder einen schrägen Versatz für das mindestens eine hierbei noch klemmend zwischen den Greiferleisten 4" und 4‴ gehaltene Stückgut 5 veranlassen, um das Stückgut 5 abgestimmt auf eine zu bildende palettierfähige Lage zu manipulieren.

Wie vorhergehend bereits erwähnt wurde, lässt Fig. 1 darüber hinaus erkennen, dass die Greifvorrichtung 1 zwei weitere Greiferleisten 4 und 4' besitzt, die in Fig. 1 kein zur klemmenden Entgegennahme von Stückgütern 5 der einen Reihe 9 vorgesehenes Greiferleistenpaar ausbilden. Die zwei weiteren Greiferleisten 4 und 4' werden in Fig. 1 nicht benötigt, um Stückgüter 5 der einen Reihe 9 klemmend entgegenzunehmen und verweilen daher in Fig. 1 in einer Warteposition. Die eigenen Aktoren 8 und 8', welche den außenliegenden Greiferleisten 4 und 4' zugeordnet sind, werden von der Steuereinrichtung S nicht betätigt, sofern Stückgüter 5 der einen Reihe 9 manipuliert werden sollen.

Wie aus einer Zusammenschau der Figuren 1 bis 3 deutlich wird, können die Stückgüter 5, 5' und 5" über die Horizontalfördereinrichtung 15 entweder in einer Reihe 9, in zwei parallelen Reihen 9 und 9' oder in drei parallelen Reihen 9, 9' und 9" bereitgestellt werden. Sofern sich eine Reihenanzahl ändert, müssen Greifvorrichtungen, welche bereits aus dem Stand der Technik bekannt sind, mit weiteren Greiferleistenpaaren ergänzt werden oder ggf. Greiferleistenpaare von der Greifvorrichtung entfernt werden, um die jeweilige Greifvorrichtung an sich ändernde Bereitstellungen von Stückgütern 5 anzupassen.

Bei der Greifvorrichtung 1 des Ausführungsbeispiels nach Figuren 1 bis 3 ist ein solche Ergänzung von Greiferleistenpaaren oder eine solche Abnahme von Greiferleistenpaaren nicht notwendig, um die Greifvorrichtung 1 an eine sich ändernde Bereitstellung von Stückgütern 5 anpassen zu können. Die Greifvorrichtung 1 kann daher schnell und einfach an eine Bereitstellung an Stückgütern mit einer unterschiedlichen Reihenanzahl angepasst werden, ohne dass ein Betrieb der Transport- und Manipulationsstrecke 10 über längere Zeit unterbrochen werden muss. Sämtliche der vorliegend genau vier Greiferleisten 4, 4', 4" und 4‴ verbleiben unabhängig von der jeweiligen Reihenanzahl an bereitgestellten Stückgütern 5, 5' bzw. 5" an der Greifvorrichtung 1 festgesetzt bzw. werden bei einer sicher sich ändernden Reihenanzahl nicht von der Greifvorrichtung 1 abgenommen.

Bei der Greifvorrichtung 1 des Ausführungsbeispiels nach Figuren 1 bis 3 können der Steuereinrichtung S Informationen zur jeweiligen Reihenanzahl vorgegeben werden. Beispielsweise kann es hierbei sein, dass im Bereich der Transport- und Manipulationsstrecke 10 entsprechende Sensoren positioniert sind, über welche die Steuereinrichtung S eine entsprechende Reihenanzahl erkennen kann. Auch kann es sein, dass die Steuereinrichtung S mit einem Bedienfeld in Verbindung steht oder ein solches Bedienfeld besitzt, über welches der Steuereinrichtung S Informationen zur jeweiligen Reihenanzahl vorgegeben werden können.

Die Steuereinrichtung S ist in der Lage, unter Berücksichtigung der Informationen zur Reihenanzahl eine bestimmte Anzahl festzulegen, welche bestimmte Anzahl mindestens ein aus zwei Greiferleisten 4, 4', 4", 4‴ gebildetes Greiferleistenpaar zahlenmäßig definiert. Wird der Greifvorrichtung 1 mittels der Horizontalfördereinrichtung 15 lediglich eine Reihe 9 an Stückgütern 5 bereitgestellt, so benötigt die Greifvorrichtung 1 lediglich ein aus zwei Greiferleisten 4" und 4‴ gebildetes Greiferleistenpaar um Stückgüter 5 der einen Reihe 9 klemmend entgegennehmen zu können.

Sofern der Steuereinrichtung S demnach vorgegeben wird, dass der Greifvorrichtung 1 über die Horizontalfördereinrichtung 15 Stückgüter in genau einer Reihe 9 bereitgestellt werden, bildet die Steuereinrichtung S aus den Greiferleisten 4" und 4‴ genau ein Greiferleistenpaar aus und veranlasst, dass die weiteren Greiferleisten 4 und 4' in eine Warteposition bewegt werden oder in einer Warteposition verbleiben, sofern sich die weiteren Greiferleisten 4 und 4' bereits in ihrer jeweiligen Warteposition befinden.

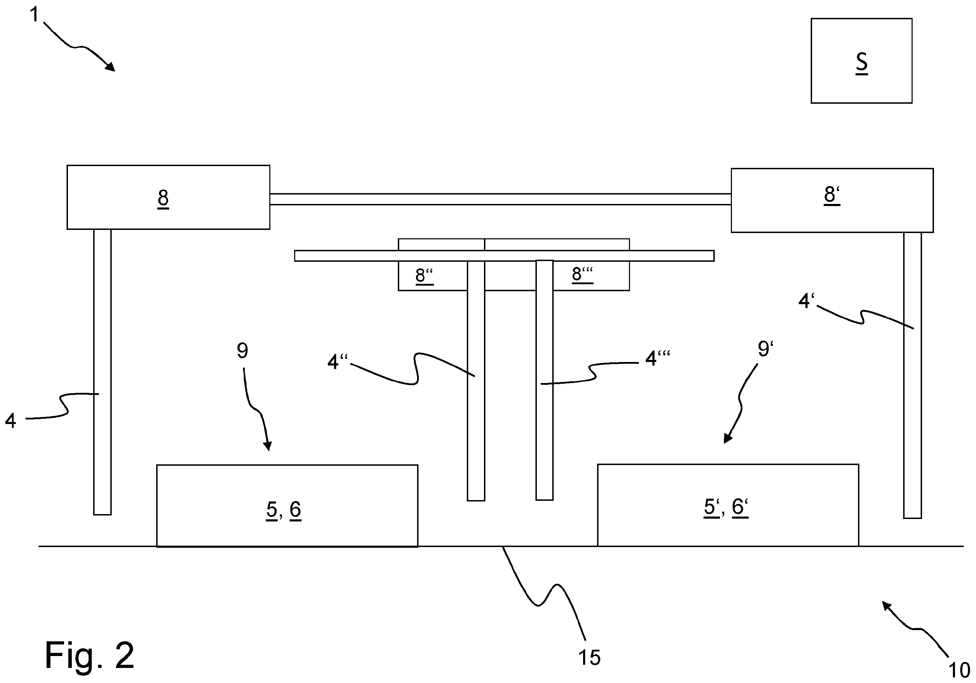

Die schematische Ansicht der Fig. 2 lässt erkennen, dass die Horizontalfördereinrichtung 15 der Greifvorrichtung 1 Stückgüter 5 in genau zwei parallelen Reihen 9 und 9' bereitstellt. Somit hat sich die in Fig. 1 noch vorgesehene Art der Bereitstellung, bei welcher der Greifvorrichtung 1 Stückgüter 5 in genau einer Reihe bereitgestellt werden, in Fig. 2 geändert, wobei der Greifvorrichtung 1 in Fig. 2 nun Stückgüter 5 und 5' in genau zwei parallelen Reihen 9 und 9' bereitgestellt werden.

Um Stückgüter 5 und 5' der zwei parallelen Reihen 9 und 9' klemmend erfassen und manipulieren zu können, benötigt die Greifvorrichtung 1 zwei Greiferleistenpaare, die jeweils aus zwei Greiferleisten 4, 4', 4" bzw. 4‴ gebildet sind.

In Fig. 2 ist ein erstes Greiferleistenpaar aus den zwei Greiferleisten 4 und 4" gebildet, wobei ein zweites Greiferleistenpaar aus den zwei Greiferleisten 4' und 4‴ gebildet wurde. Sofern der Steuereinrichtung S die Reihenanzahl bekannt ist, kann die Steuerungseinrichtung S eine Anzahl an benötigten Greiferleistenpaaren festlegen, wobei die Anzahl an Greiferleistenpaaren und die Reihenanzahl identisch ausgebildet sind. Bei einer Manipulation von Stückgütern 5 und 5' der beiden parallelen Reihen 9 und 9' führen die Greiferleisten 4 und 4", welche ein erstes Greiferleistenpaar bilden, eine Zustellbewegung aus, wodurch mindestens ein Stückgut 5 der ersten Reihe 9 über das erste Greiferleistenpaar klemmend erfasst wird.

Zeitgleich oder zumindest näherungsweise zeitgleich führen die Greiferleisten 4‴ und 4', welche ein zweites Greiferleistenpaar bilden, eine Zustellbewegung aus, wodurch mindestens ein Stückgut 5' der zweiten Reihe 9 klemmend erfasst wird. Sodann können die noch klemmend über das erste Greiferleistenpaar und das zweite Greiferleistenpaar gehaltenen Stückgüter 5 und 5' über die Greifvorrichtung 1 manipuliert und bedarfsweise schräg zur Transportrichtung der Horizontalfördereinrichtung 15 versetzt und/oder gedreht werden. Die Bewegung der Greiferleisten 4, 4', 4" und 4‴ erfolgt wiederum über ihren jeweiligen zugeordneten eigenen Aktor 8, 8', 8", 8‴, welcher hierzu von der Steuereinrichtung S angesteuert wird.

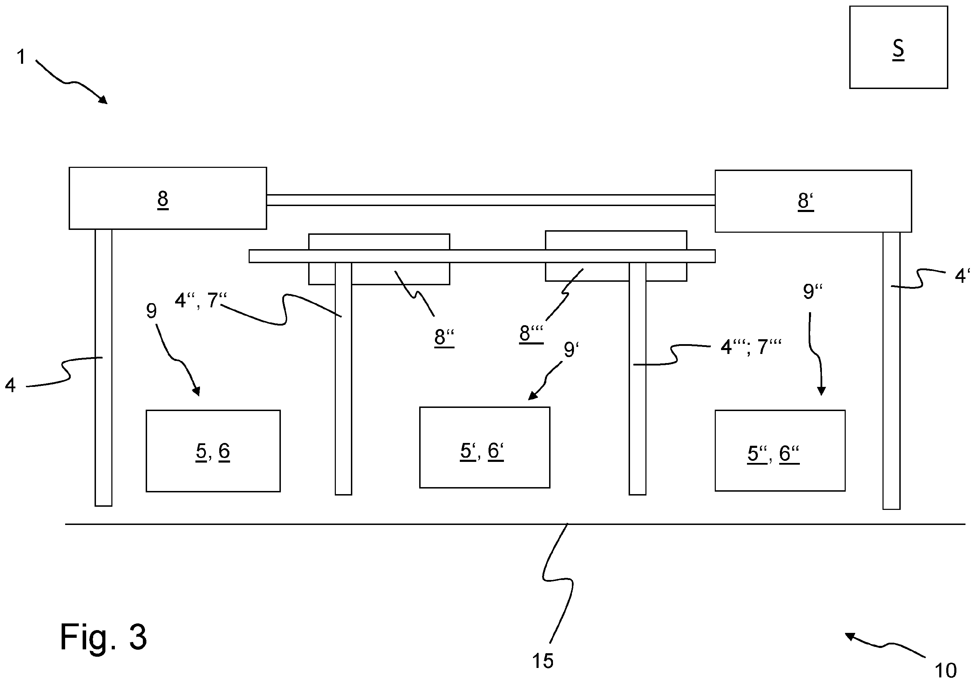

Die schematische Ansicht der Fig. 3 verdeutlicht darüber hinaus eine Arbeitsweise der Greifvorrichtung 1, sofern der Greifvorrichtung 1 über die Horizontalfördereinrichtung 15 Stückgüter 5, 5' und 5" in drei parallelen Reihen 9, 9' und 9" bereitgestellt werden. Wie vorhergehend bereits erwähnt wurde, können der Steuereinrichtung S Informationen zur jeweiligen Reihenanzahl vorgegeben werden, wozu die Steuereinrichtung S mit einer entsprechenden Sensorik zusammenarbeitet oder wobei ein Benutzer der Steuereinrichtung S entsprechende Informationen zur Reihenanzahl über ein Bedienfeld vorgibt.

Auch aus drei parallelen Reihen 9, 9' und 9" kann die Greifvorrichtung 1 Stückgüter 5, 5' und 5" entgegennehmen, ohne dass die Greifvorrichtung 1 hierzu umgerüstet werden muss. Die Greifvorrichtung 1 stellt hierzu wiederum drei Greiferleistenpaare bereit, um Stückgüter 5, 5' und 5" aus den drei parallelen Reihen 9, 9' und 9" klemmend entgegennehmen und hierauf manipulieren zu können. Die Anzahl an von der Steuereinrichtung S bereitgestellten Greiferleistenpaaren und die Reihenanzahl sind wiederum identisch ausgebildet.

Stückgüter 5 der ersten Reihe 9 werden über ein erstes Greiferleistenpaar entgegengenommen, welches aus den Greiferleisten 4 und 4" gebildet wird. Stückgüter 5' der zweiten Reihe 9' werden über ein zweites Greiferleistenpaar entgegengenommen, welches aus den Greiferleisten 4" und 4‴ gebildet wird. Stückgüter 5" der dritten Reihe 9" werden über ein drittes Greiferleistenpaar entgegengenommen, welches durch die Greiferleisten 4' und 4‴ gebildet wird.

Aus Fig. 3 wird somit deutlich, dass die Greiferleiste 4" eine gemeinsame Greiferleiste 7" für das erste Greiferleistenpaar und das zweite Greiferleistenpaar bildet bzw. dass die Greiferleiste 4" als gemeinsame Greiferleiste 7" sowohl Bestandteil des ersten Greiferleistenpaares als auch Bestandteil des zweiten Greiferleistenpaares ist. Weiter wird aus Fig. 3 deutlich, dass die Greiferleiste 4‴ eine gemeinsame Greiferleiste 7‴ für das zweite Greiferleistenpaar und das dritte Greiferleistenpaar bildet bzw. dass die Greiferleiste 4‴ als gemeinsame Greiferleiste 7‴ sowohl Bestandteil des zweiten Greiferleistenpaares als auch Bestandteil des dritten Greiferleistenpaares ist.

Wenn die Greifvorrichtung 1 Stückgüter 5, 5' und 5" aus den drei parallelen Reihen 9, 9' und 9" entgegennimmt, werden die Greiferleisten 4" und 4‴, welche das zweite Greiferleistenpaar bilden, jeweils in Richtung des Stückgutes 5' der zweiten Reihe 9' bewegt, bis die Greiferleisten 4" und 4‴ mit dem jeweiligen mindestens einen Stückgut 5' der zweiten Reihe 9' in Anlage gelangen und das jeweilige mindestens eine Stückgut 5' der zweiten Reihe 9' klemmend zwischen den Greiferleisten 4" und 4‴ gehalten wird. Zeitlich überlagert wird die Greiferleiste 4 in Richtung des jeweiligen mindestens einen Stückgutes 5 der ersten Reihe 9 bewegt, gelangt sodann mit dem jeweiligen mindestens einen Stückgut 5 der ersten Reihe 9 in Oberflächenkontakt und schiebt das bis dahin in der ersten Reihe 9 befindliche mindestens eine Stückgut 5 in Richtung der zweiten Reihe 9', bis das jeweilige mindestens eine Stückgut 5 mit der Greiferleiste 4" bzw. mit der gemeinsamen Greiferleiste 7" in Oberflächenkontakt gelangt und klemmend über die Greiferleisten 4 und 4" gehalten wird.

Ebenso wird zeitlich überlagert die Greiferleiste 4' in Richtung des jeweiligen mindestens einen Stückgutes 5" der dritten Reihe 9" bewegt, gelangt sodann mit dem jeweiligen mindestens einen Stückgut 5" der dritten Reihe 9" in Oberflächenkontakt und schiebt das bis dahin in der dritten Reihe 9" befindliche mindestens eine Stückgut 5" in Richtung der zweiten Reihe 9', bis das jeweilige mindestens eine Stückgut 5" mit der Greiferleiste 4‴ bzw. mit der gemeinsamen Greiferleiste 7‴ in Oberflächenkontakt gelangt und klemmend über die Greiferleisten 4' und 4‴ gehalten wird.

Nachdem die Stückgüter 5, 5' und 5" der ersten Reihe 9, der zweiten Reihe 9' und der dritten Reihe 9" über die Greifvorrichtung 1 derart klemmend erfasst wurden, können die Stückgüter 5, 5' und 5" manipuliert und hierbei ggf. schräg zu einer Transportrichtung der Horizontalfördereinrichtung 15 versetzt und/oder gedreht werden. Aus der beschriebenen Funktionsweise der Greifvorrichtung 1 gemäß Fig. 3 wird auch deutlich, dass bei einer Bereitstellung von Stückgütern 5, 5' und 5" in drei parallelen Reihen 9, 9' und 9" sämtliche Greiferleisten 4, 4', 4" und 4‴ in Richtung der zweiten Reihe 9' bzw. in Richtung der mittleren Reihe 9' bewegt werden, um durch drei Greiferleistenpaare Stückgüter 5, 5', und 5" aus den drei parallelen Reihen klemmend entgegenzunehmen.

Die Bewegung der Greiferleisten 4, 4', 4" und 4‴ erfolgt wiederum über einen jeweiligen eigenen Aktor 8, 8', 8" und 8‴, welcher hierzu von der Steuereinrichtung S angesteuert wird. Nachdem die Stückgüter 5, 5' bzw. 5" über die Greifvorrichtung 1 manipuliert worden sind, können die Greiferleisten 4, 4', 4" und 4‴ über ihren jeweiligen eigenen Aktor 8, 8', 8", 8‴ in eine Ausgangsposition zurückbewegt werden, welche jeweilige Ausgangsposition in Fig. 3 dargestellt ist.

Die schematische Ansicht der Fig. 4 zeigt weitere Aspekte, wie sie bei diversen Ausführungsformen der erfindungsgemäßen Greifvorrichtung 1 und bei der Umsetzung in diversen Ausführungsformen des erfindungsgemäßen Verfahrens 100 vorgesehen sein können. Bei dem Ausführungsbeispiel nach Figuren 1 bis 3 ist den Greiferleisten 4, 4', 4" und 4‴ jeweils ein eigener Aktor 8, 8', 8" und 8‴ zugeordnet, über welchen die jeweilige Greiferleiste 4, 4', 4" und 4‴ bewegt werden kann um mit einer weiteren Greiferleiste 4, 4', 4" bzw. 4‴ als Greiferleistenpaar ein jeweiliges Stückgut 5, 5' und 5" klemmend entgegenzunehmen.

Die Fig. 4 zeigt eine schematische Draufsicht auf eine weitere Ausführungsform einer Greifvorrichtung 1. Bei der Ausführungsform nach Fig. 4 ist dem Greiferleistenpaar, welche aus den beiden in Fig. 4 zu erkennenden Greiferleisten 4 und 4' gebildet ist, ein gemeinsamer eigener Aktor zugeordnet, welcher das Antriebsrad 32 drehend bewegen kann und hierdurch den Riemen 3 umlaufend antreibt. Der Riemen 3 ist zudem über ein Umlenkrad 31 geführt, welches bei einer drehenden Bewegung des Antriebsrades 32 zusammen mit dem Antriebsrad 31 rotierend bewegt wird. Dem Umlenkrad ist jedoch kein Aktor zugeordnet, so dass das Umlenkrad 31 bei einer drehenden Bewegung des Antriebsrades 32 passiv über den Riemen 3 mitgedreht wird.

Die Greiferleisten 4 und 4' sind jeweils an einem Trum des Riemens 3 derart befestigt, dass sich die Greiferleisten 4 und 4' bei einer drehenden Bewegung des Antriebsrades 32 in einer ersten Drehrichtung einander nähern und hierdurch ein Stückgut 5, 5' bzw. 5" (vgl. Figuren 1 bis 3) klemmend erfassen können. Wir das Antriebsrad 32 hierauf folgend in einer entgegengesetzten Drehrichtung gedreht, vergrößern die Greiferleisten 4 und 4' ihren relativen Abstand zueinander und können das bis dahin noch klemmend gehaltene Stückgut 5, 5' bzw. 5" wieder freigeben.

Die Greifvorrichtung 1 besitzt darüber hinaus zwei weitere Greiferleisten 4" und 4‴ (vgl. Figuren 1 bis 3), welche ebenso ein Greiferleistenpaar ausbilden und in der Draufsicht nach Fig. 4 unterhalb der Greiferleisten 4 und 4' angeordnet sind. Die zwei weiteren Greiferleisten 4" und 4‴ werden somit in der Draufsicht nach Fig. 4 von den Greiferleisten 4 und 4' verdeckt und sind daher nicht zu erkennen. Auch die zwei weiteren Greiferleisten 4" und 4‴ können wiederum an einem weiteren Riemen befestigt sein, welcher über ein weiteres Antriebsrad angetrieben wird und um ein weiteres Umlenkrad umlaufend geführt ist. Den zwei weiteren Greiferleisten 4" und 4‴ kann hierbei wiederum ein eigener Aktor zugeordnet sein, welcher das weitere Antriebsrad drehend bewegt, um über den Riemen bzw. den weiteren Riemen eine Zustellbewegung auf diese weiteren Greiferleisten 4" und 4‴ zu übertragen.

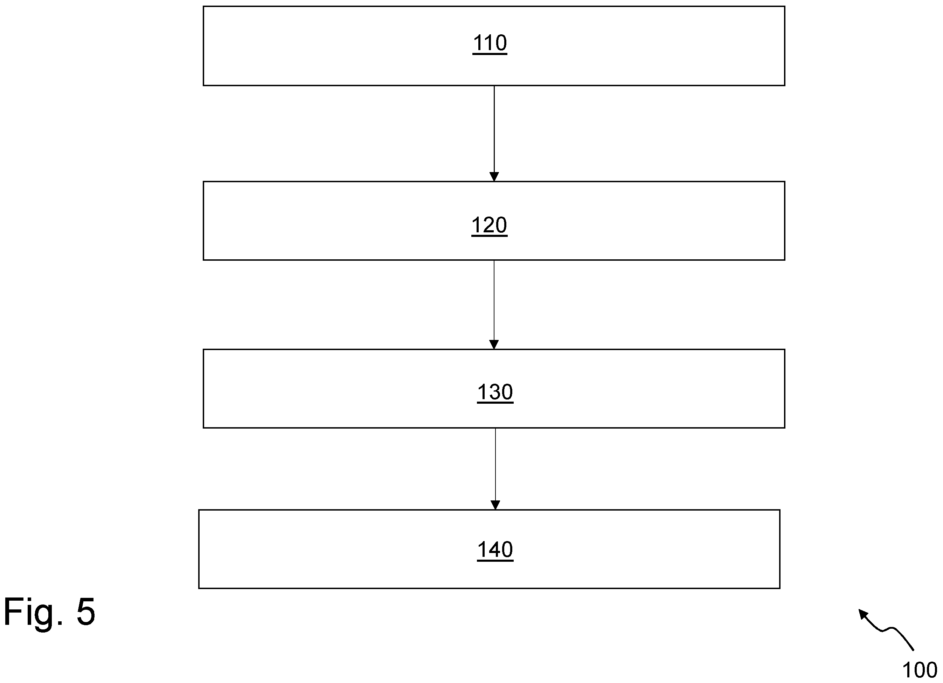

Die Fig. 5 zeigt im Flussdiagramm Schritte, wie sie einzeln oder gemäß der in Fig. 5 dargestellten Kombination in diversen Ausführungsformen des erfindungsgemäßen Verfahrens 100 vorgesehen sein können. Im Schritt 110 werden einer Steuereinrichtung S Informationen zu einer jeweiligen Anzahl an Reihen vorgebeben, in welchen Stückgüter 5, 5' bzw. 5" über eine Horizontalfördereinrichtung 15 der Greifvorrichtung 1 bereitgestellt werden.

Im Schritt 120 bildet die Steuerungseinrichtung S aus mehreren Greiferleisten 4, 4', 4" und 4‴ Greiferleistenpaare, deren Anzahl der jeweiligen Reihenanzahl entspricht, welche der Steuereinrichtung S im Schritt 110 vorgegeben wurde. Nicht benötigte Greiferleisten 4, 4', 4" und 4‴ werden im Schritt 120 zudem auf Veranlassung der Steuereinrichtung S in eine Warteposition überführt, sofern sie sich nicht bereits in der jeweiligen Warteposition befinden.

Im Schritt 130 werden die Stückgüter 5, 5' bzw. 5" in einer Reihe 9 oder mehreren parallelen Reihen 9, 9' und 9" entsprechend der im Schritt 110 vorgegebenen Reihenanzahl der Greifvorrichtung 1 bereitgestellt, wozu die Horizontalfördereinrichtung 15 Stückgüter 5, 5' bzw. 5" in einen Arbeitsbereich der Greifvorrichtung 1 bewegt.

Hierauf folgt der Schritt 140, bei welchem die Greifvorrichtung 1 Stückgüter 5, 5', 5" aus der genau einen in ihren Arbeitsbereich bewegten Reihe 9' oder aus den mehreren in ihren Arbeitsbereich bewegten parallelen Reihen 9', 9", 9‴ mittels der zahlenmäßig hierauf abgestimmten Anzahl an Greiferleistenpaaren klemmend entgegennimmt und manipuliert, um mehrere Stückgüter 5, 5' bzw. 5" in eine relative Ausrichtung zu überführen, welche auf eine aus den mehreren Stückgütern 5, 5' bzw. 5" zu bildende palettierfähige Lage abgestimmt ist.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

Wenn auch im Zusammenhang der Figurenbeschreibung generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen in irgendeiner Weise in seinem Verständnis beeinträchtigt wäre. Die Figuren ermöglichen es dem Fachmann als Leser somit, anhand der konkreter erläuterten Umsetzungen ein besseres Verständnis für den in den Ansprüchen sowie im allgemeinen Teil der Beschreibung allgemeiner und/oder abstrakter formulierten Erfindungsgedanken abzuleiten.

### Bezugszeichenliste

- 1: Greifvorrichtung
- 3: Riemen
- 4: Greiferleiste, weitere Greiferleiste
- 4': Greiferleiste, weitere zweite Greiferleiste
- 4": Greiferleiste
- 4‴: Greiferleiste
- 5: Stückgut
- 5': Stückgut
- 5": Stückgut
- 6: Gebinde
- 6': Gebinde
- 6": Gebinde
- 7": gemeinsame Greiferleiste
- 7‴: gemeinsame Greiferleiste
- 8: Aktor
- 8': Aktor
- 8": Aktor
- 8‴: Aktor
- 9: Reihe an Stückgütern 5
- 9': Reihe an Stückgütern 5'
- 9": Reihe an Stückgütern 5"
- 10: Transport- und Manipulationsstrecke
- 15: Horizontalfördereinrichtung
- 31: Umlenkrad
- 32: Antriebsrad
- 100: Verfahren
- 110: erster Verfahrensschritt
- 120: zweiter Verfahrensschritt
- 130: dritter Verfahrensschritt
- 140: vierter Verfahrensschritt
- S: Steuereinrichtung

## Patentansprüche

1. Verfahren (100) zur Handhabung von Stückgütern (5, 5', 5") mit einer Greifvorrichtung (1), welche mindestens drei Greiferleisten (4, 4', 4", 4‴) besitzt, das Verfahren (100) umfassend folgende Schritte:
- Bereitstellen von Stückgütern (5, 5', 5") über mindestens eine Horizontalfördereinrichtung (15);
- Klemmende Entgegennahme jeweils mindestens eines bereitgestellten Stückgutes (5, 5', 5") über mindestens ein aus zwei Greiferleisten (4, 4', 4", 4‴) gebildetes Greiferleistenpaar der Greifvorrichtung (1) und Manipulieren des jeweiligen klemmend entgegengenommenen mindestens einen Stückgutes (5, 5', 5") durch die Greifvorrichtung (1), wobei
- einer Steuereinrichtung (S) Informationen zur Bereitstellung der Stückgüter (5, 5', 5") vorgegeben werden und die Steuereinrichtung (S) unter Berücksichtigung der Informationen eine bestimmte Anzahl, welche mindestens ein aus zwei Greiferleisten (4, 4', 4", 4‴) gebildetes Greifenleistenpaar zahlenmäßig definiert, festlegt, woraufhin die Greifvorrichtung (1) über die Steuereinrichtung (S) angesteuert wird und hierbei über ein jeweiliges aus zwei Greiferleisten (4, 4', 4", 4‴) gebildetes Greiferleistenpaar gemäß der zahlenmäßig definierten Anzahl jeweils mindestens ein bereitgestelltes Stückgut (5, 5', 5") entgegennimmt und das über das jeweilige aus zwei Greiferleisten (4, 4', 4", 4‴) gebildete Greiferleistenpaar jeweils entgegengenommene mindestens eine Stückgut (5, 5', 5") hierauf manipuliert, das Verfahren (100) **dadurch gekennzeichnet, dass**
- die Stückgüter (5, 5', 5") der Greifvorrichtung (1) über die mindestens eine Horizontalfördereinrichtung (15) wahlweise in einer Reihe (9) oder in mehreren parallelen Reihen (9, 9', 9") bereitgestellt werden und der Steuereinrichtung (S) Informationen zur jeweiligen Reihenanzahl vorgegeben werden, woraufhin die Steuereinrichtung (S) eine Anzahl, welche mindestens ein aus zwei Greiferleisten (4, 4', 4", 4‴) gebildetes Greiferleistenpaar zahlenmäßig definiert, identisch zur vorgegebenen Reihenanzahl festlegt, und dass
- die Steuereinrichtung (S) bei einer Reihenanzahl n≥2 für ein erstes Greiferleistenpaar und ein zweites Greiferleistenpaar eine bestimmte gemeinsame Greiferleiste (7", 7‴) auswählt und die bestimmte gemeinsame Greiferleiste (7", 7‴) mit einer ersten weiteren Greiferleiste (4) als erstes Greiferleistenpaar festlegt und die bestimmte gemeinsame Greiferleiste (7", 7‴) mit einer weiteren zweiten Greiferleiste (4') als zweites Greiferleistenpaar festlegt.

2. Verfahren nach Anspruch 1, bei welchem jeder Greiferleiste (4, 4', 4", 4‴) der mindestens drei Greiferleisten (4, 4', 4", 4‴) ein eigener Aktor (8, 8', 8", 8‴) zugeordnet wird, wobei
- eine Greiferleiste (4, 4', 4", 4‴) oder mehrere Greiferleisten (4, 4', 4", 4‴) zur klemmenden Entgegennahme des jeweiligen mindestens einen Stückgutes (5, 5', 5") über ihren jeweiligen eigenen Aktor (8, 8', 8", 8‴) bewegt werden und/oder wobei
- eine Greiferleiste (4, 4', 4", 4‴) oder mehrere Greiferleisten (4, 4', 4", 4‴) über ihren jeweiligen eigenen Aktor (8, 8', 8", 8‴) in eine jeweilige Position bewegt werden, in welcher die jeweilige Greiferleiste (4, 4', 4", 4‴) mit einer weiteren Greiferleiste (4, 4', 4", 4‴) ein jeweiliges Greiferleistenpaar ausbildet.

3. Verfahren nach Anspruch 2, bei welchem die eigenen Aktoren (8, 8', 8", 8‴) jeweils als Linearmotor ausgebildet sind.

4. Verfahren nach Anspruch 1, bei welchem einem jeweiligen Greiferleistenpaar jeweils ein eigener Aktor zugeordnet wird, welcher zur Entgegennahme des jeweiligen mindestens einen bereitgestellten Stückgutes (5, 5', 5") über eine jeweilige Kette und/oder über einen jeweiligen Riemen (3) eine Zustellbewegung auf die jeweiligen zwei Greiferleisten (4, 4', 4", 4‴) des jeweiligen Greiferleistenpaares überträgt.

5. Verfahren nach einem der Ansprüche 1 bis 4, bei welchem über ein jeweiliges aus zwei Greiferleisten (4, 4', 4', 4‴) gebildetes Greiferleistenpaar gemäß der zahlenmäßig definierten Anzahl das jeweilige mindestens eine entgegengenommene Stückgut (5, 5', 5") manipuliert und hierdurch in eine relative Ausrichtung gegenüber weiteren bereits manipulierten Stückgütern (5, 5', 5") gebracht wird, welche auf eine aus manipulierten Stückgütern (5, 5', 5") zu bildende palettierfähige Lage abgestimmt ist.

6. Greifvorrichtung (1) zur Handhabung von Stückgütern (5, 5', 5"), umfassend
- mindestens drei Greiferleisten (4, 4', 4", 4‴), von welchen ein jeweiliges aus zwei Greiferleisten (4, 4', 4", 4‴) gebildetes Greiferleistenpaar zur jeweiligen klemmenden Entgegennahme jeweils mindestens eines Stückgutes (5, 5', 5") ausgebildet ist sowie umfassend
- eine Steuereinrichtung (S), welcher Informationen zu einer für die Greifvorrichtung (1) vorgesehenen Bereitstellung von Stückgütern (5, 5', 5") vorgebbar sind, wobei die Steuereinrichtung (S) unter Berücksichtigung der Informationen zum Festlegen einer bestimmten Anzahl ausgebildet ist, welche bestimmte Anzahl mindestens ein aus zwei Greiferleisten (4, 4', 4", 4‴) gebildetes Greiferleistenpaar zahlenmäßig definiert und wobei über die Steuereinrichtung (S) das mindestens eine aus zwei Greiferleisten (4, 4', 4", 4‴) gebildete Greiferleistenpaar gemäß der zahlenmäßig definierten Anzahl zur klemmenden Entgegennahme des jeweiligen mindestens einen Stückgutes (5, 5', 5") betätigbar ist, die Greifvorrichtung (1) **dadurch gekennzeichnet, dass**
- der Greifvorrichtung Stückgüter (5, 5', 5") wahlweise in einer Reihe (9) oder in mehreren parallelen Reihen (9, 9', 9") bereitstellbar sind und wobei der Steuereinrichtung (S) Informationen zur Reihenanzahl vorgebbar sind, und wobei die Steuereinrichtung (S) derart zum Festlegen der bestimmten Anzahl ausgebildet ist, dass die bestimmte Anzahl, welche mindestens ein aus zwei Greiferleisten (4, 4', 4", 4‴) gebildetes Greiferleistenpaar zahlenmäßig definiert, der jeweiligen Reihenanzahl entspricht, und dass
- die Steuereinrichtung (S) derart ausgebildet ist, dass die Steuereinrichtung (S) bei einer Reihenanzahl n≥2 eine bestimmte Greiferleiste (7", 7‴) einem ersten Greiferleistenpaar und einem zweiten Greiferleistenpaar gemeinsam zuordnen kann.

7. Greifvorrichtung nach Anspruch 6, bei welcher jeder Greiferleiste (4, 4', 4", 4‴) der mindestens drei Greiferleisten (4, 4', 4", 4‴) ein eigener Aktor (8, 8', 8", 8‴) zugeordnet ist, wobei der jeweilige eigene Aktor (8, 8', 8", 8‴) mit der Steuereinrichtung (S) in Verbindung steht und wobei
- ein eigener Aktor (8, 8', 8", 8‴) oder mehrere eigene Aktoren (8, 8', 8", 8‴) über die Steuereinrichtung (S) zur jeweiligen klemmenden Entgegennahme des jeweiligen mindestens einen Stückgutes (5, 5', 5") über die jeweilige Greiferleiste (4, 4', 4", 4‴) ansteuerbar sind und/oder wobei
- ein eigener Aktor (8, 8', 8", 8‴) oder mehrere eigene Aktoren (8, 8', 8", 8‴) über die Steuereinrichtung (S) zur Bewegung der jeweiligen Greiferleiste (4, 4', 4", 4‴) in eine jeweilige Position ansteuerbar sind, in welcher die jeweilige Greiferleiste (4, 4', 4", 4‴) mit einer weiteren Greiferleiste (4, 4', 4", 4‴) ein jeweiliges Greiferleistenpaar ausbildet.

8. Greifvorrichtung nach Anspruch 7, bei welcher die eigenen Aktoren (8, 8', 8", 8‴) jeweils als Linearmotor ausgebildet sind.

9. Greifvorrichtung nach Anspruch 6, bei welcher einem jeweiligen Greiferleistenpaar ein jeweiliger eigener Aktor zugeordnet ist, über welchen jeweiligen eigenen Aktor eine Kette und/oder ein Riemen (3) umlaufend antreibbar ist und wobei die jeweiligen zwei Greiferleisten (4, 4', 4", 4‴) des jeweiligen Greiferleistenpaares derart an der Kette und/oder an dem Riemen (3) angeordnet sind, dass die jeweiligen zwei Greiferleisten (4, 4', 4", 4‴) bei einem umlaufenden Antrieb der jeweiligen Kette und/oder des jeweiligen Riemens (3) über den jeweiligen eigenen Aktor eine Zustellbewegung zur klemmenden Entgegennahme des jeweiligen mindestens einen Stückgutes (5, 5', 5") ausführen können.

10. Greifvorrichtung nach einem der Ansprüche 6 bis 9, welche zum Manipulieren und Überführen eines jeweiligen klemmend entgegengenommenen Stückgutes (5, 5', 5") in eine relative Ausrichtung gegenüber weiteren bereits manipulierten Stückgütern (5, 5', 5") ausgebildet ist, welche relative Ausrichtung auf eine aus manipulierten Stückgütern (5, 5', 5") zu bildende palettierfähige Lage abgestimmt ist.

11. Transport- und Manipulationsstrecke (10) für Stückgüter, umfassend
- eine Greifvorrichtung (1) nach einem der Ansprüche 6 bis 10 sowie
- eine Horizontalfördereinrichtung (15), über welche der Greifvorrichtung (1) in mindestens einer Reihe (9, 9', 9") hintereinander bewegte Stückgüter (5, 5', 5") bereitstellbar sind, wobei
die Greifvorrichtung (1) über ihre Steuereinrichtung (") zum Drehen von klemmend erfassten Stückgütern (5, 5', 5") und/oder zum Versetzen von klemmend erfassten Stückgütern (5, 5', 5") auf der Horizontalfördereinrichtung (15) ansteuerbar ist.

## Claims

1. A method (100) for handling piece goods (5, 5', 5"), with a gripping device (1) which has at least three gripper bars (4, 4', 4", 4‴), the method (100) comprising the following steps:
- supplying piece goods (5, 5', 5") via at least one horizontal conveyor (15);
- receiving in each case at least one supplied piece good (5, 5', 5") in a clamping manner via at least one pair of gripper bars of the gripping device (1), which pair of gripper bars is formed from two gripper bars (4, 4', 4", 4‴), and manipulating the particular at least one piece good (5, 5', 5") received in a clamping manner by means of the gripping device (1), wherein
- information on supplying the piece goods (5, 5', 5") is specified to a control device (S), and, in consideration of the information specified, the control device (S) determines a specific number which numerically defines at least one pair of gripper bars formed from two gripper bars (4, 4', 4", 4‴), whereupon the gripping device (1) is actuated via the control device (S) and in this context receives in each case at least one supplied piece good (5, 5', 5") in accordance with the numerically defined number via a particular pair of gripper bars formed from two gripper bars (4, 4', 4", 4‴), and hereupon manipulates the at least one piece good (5, 5', 5") received in each case via the particular pair of gripper bars formed from two gripper bars (4, 4', 4", 4‴), the method (100) being **characterised in that**
- the piece goods (5, 5', 5") are supplied to the gripping device (1) via the at least one horizontal conveyor (15) optionally in one row (9) or in a plurality of parallel rows (9, 9', 9"), and information on the particular number of rows is specified to the control device (S), whereupon the control device (S) determines a number identical to the specified number of rows, which number numerically defines at least one pair of gripper bars formed from two gripper bars (4, 4', 4", 4‴), and **in that**
- the control device (S) selects a specific common gripper bar (7", 7‴) for a first pair of gripper bars and a second pair of gripper bars in the case of a number of rows n≥2 and determines the specific common gripper bar (7", 7‴) together with a further first gripper bar (4) as first pair of gripper bars and determines the specific common gripper bar (7", 7‴) together with a further second gripper bar (4) as second pair of gripper bars.

2. The method according to claim 1, in which each gripper bar (4, 4', 4", 4‴) of the at least three gripper bars (4, 4', 4", 4‴) is assigned its own actuator (8, 8', 8", 8‴), wherein
- one gripper bar (4, 4', 4", 4‴) or a plurality of gripper bars (4, 4', 4", 4‴) are moved each via their particular own actuator (8, 8', 8", 8‴) for the purpose of receiving the particular at least one piece good (5, 5', 5") in a clamping manner, and/or wherein
- one gripper bar (4, 4', 4", 4‴) or a plurality of gripper bars (4, 4', 4", 4‴) are moved each via their particular own actuator (8, 8', 8", 8‴) into a particular position in which the particular gripper bar (4, 4', 4", 4‴) forms a particular pair of gripper bars together with a further gripper bar (4, 4', 4", 4‴).

3. The method according to claim 2, in which the own actuators (8, 8', 8", 8‴) are in each case designed as a linear motor.

4. The method according to claim 1, in which a particular pair of gripper bars is in each case assigned an own actuator, which transmits an advance movement via a particular chain and/or via a particular belt (3) to the particular two gripper bars (4, 4', 4", 4‴) of the particular pair of gripper bars for the purpose of receiving the particular at least one supplied piece good (5, 5', 5").

5. The method according to one of the claims 1 to 4, in which the particular at least one piece good (5, 5', 5") received in accordance with the numerically defined number via a particular pair of gripper bars formed from two gripper bars (4, 4', 4", 4‴) is manipulated and hereby brought into a relative alignment relative to other already manipulated piece goods (5, 5', 5"), which alignment is adapted to a palletisable layer to be formed from manipulated piece goods (5, 5', 5").

6. A gripping device (1) for handling piece goods (5, 5', 5"), the gripping device comprising
- at least three gripper bars (4, 4', 4", 4‴), of which one particular pair of gripper bars formed from two gripper bars (4, 4', 4", 4‴) is designed to receive in each case at least one piece good (5, 5', 5") in a clamping manner, and further comprising
- a control device (S), to which information on a supplying of piece goods (5, 5', 5") intended for the gripping device (1) is specifiable, wherein the control device (S) is designed to determine a specific number in consideration of the information specified, which specific number numerically defines at least one pair of gripper bars formed from two gripper bars (4, 4', 4", 4‴), and wherein the at least one pair of gripper bars formed from two gripper bars (4, 4', 4", 4‴) is actuable via the control device (S) to receive the particular at least one piece good (5, 5', 5") in a clamping manner and in accordance with the numerically defined number, the gripping device (1) **being characterised in that**
- piece goods (5, 5', 5") are suppliable to the gripping device optionally in one row (9) or in a plurality of parallel rows (9, 9', 9"), and wherein information on the number of rows is specifiable to the control device (S), and wherein the control device (S) is designed to determine the specific number in such a manner that the specific number numerically defining at least one pair of gripper bars formed from two gripper bars (4, 4', 4", 4‴) corresponds to the particular number of rows, and **in that**
- the control device (S) is designed in such a manner that the control device (S) can assign a specific gripper bar (7", 7‴) that is in common to a first pair of gripper bars and a second pair of gripper bars in the case of a number of rows n≥2.

7. The gripping device according to claim 6, in which each gripper bar (4, 4', 4", 4‴) of the at least three gripper bars (4, 4', 4", 4‴) is assigned its own actuator (8, 8', 8", 8‴), wherein each particular own actuator (8, 8', 8", 8‴) is connected to the control device (S), and wherein
- one own actuator (8, 8', 8", 8‴) or a plurality of own actuators (8, 8', 8", 8‴) are actuable via the control device (S) for the purpose of receiving the particular at least one piece good (5, 5', 5") in a clamping manner via the particular gripper bar (4, 4', 4", 4‴), and/or wherein
- one own actuator (8, 8', 8", 8‴) or a plurality of own actuators (8, 8', 8", 8‴) are actuable via the control device (S) for the purpose of moving the particular gripper bar (4, 4', 4", 4‴) into a particular position in which the particular gripper bar (4, 4', 4", 4‴) forms a particular pair of gripper bars together with a further gripper bar (4, 4', 4", 4‴).

8. The gripping device according to claim 7, in which the own actuators (8, 8', 8", 8‴) are in each case designed as a linear motor.

9. The gripping device according to claim 6, in which a particular pair of gripper bars is assigned a particular own actuator, via which particular own actuator a chain and/or a belt (3) is drivable in a circulating manner, and wherein the particular two gripper bars (4, 4', 4", 4‴) of the particular pair of gripper bars is arranged at the chain and/or at the belt (3) in such a manner that the particular two gripper bars (4, 4', 4", 4‴) can carry out an advance movement via the particular own actuator for the purpose of receiving the particular at least one supplied piece good (5, 5', 5") in a clamping manner when the particular chain and/or of the particular belt (3) is being driven in a circulating manner.

10. The gripping device according to one of the claims 6 to 9, which is designed to manipulate and transfer a particular piece good (5, 5', 5") received in a clamping manner into a relative alignment relative to other already manipulated piece goods (5, 5', 5"), which relative alignment is adapted to a palletisable layer to be formed from manipulated piece goods (5, 5', 5").

11. A transport and manipulation line (10) for piece goods, the transport and manipulation line (10) comprising
- a gripping device (1) according to one of the claims 6 to 10, and
- a horizontal conveyor (15), via which piece goods (5, 5', 5") being moved one after another in at least one row (9, 9', 9") are suppliable to the gripping device (1), wherein
the gripping device (1) is actuable via its control device (S) to rotate and/or to relocate piece goods (5, 5', 5") seized in a clamping manner on the horizontal conveyor (15).

## Revendications

1. Procédé (100) de manipulation de produits de détail (5, 5', 5") au moyen d'un dispositif de préhension (1) qui comprend au moins trois barres de préhension (4, 4', 4', 4"'), le procédé (100) comprenant les étapes suivantes consistant à:
- fournir des produits de détail (5, 5', 5") par l'intermédiaire d'au moins un dispositif de transport horizontal (15);
- recevoir par serrage respectivement au moins un produit de détail (5, 5', 5") fourni, par l'intermédiaire d'au moins une paire de barres de préhension du dispositif de préhension (1) formée de deux barres de préhension (4, 4', 4", 4"), et manipuler ledit au moins un produit de détail (5, 5', 5") respectif reçu par serrage par ledit dispositif de préhension (1), dans lequel
- des informations relatives à la mise à disposition des produits de détail (5, 5', 5") sont fournies à un dispositif de commande (S), et ledit dispositif de commande (S) détermine, en tenant compte des informations, un nombre déterminé qui définit numériquement au moins une paire de barres de préhension formée de deux barres de préhension (4, 4', 4', 4‴), ce après quoi le dispositif de préhension (1) est commandé par le dispositif de commande (S) et, ce faisant, reçoit respectivement au moins un produit de détail (5, 5', 5") fourni, selon le numéro défini numériquement, par l'intermédiaire d'une paire de barres de préhension respective formée de deux barres de préhension (4, 4', 4', 4"'), et manipule ensuite ledit au moins un produit de détail (5, 5', 5") reçu respectivement par l'intermédiaire de la paire de barres de préhension respective formée de deux barres de préhension (4, 4', 4', 4"'), le procédé (100) étant **caractérisé par le fait que**
- les produits de détail (5, 5', 5") sont fournis au dispositif de préhension (1) au moyen dudit au moins un dispositif de transport horizontal (15), au choix en une rangée (9) ou en plusieurs rangées parallèles (9, 9', 9"), et des informations relatives au nombre de rangées respectif sont fournies au dispositif de commande (S), ce après quoi le dispositif de commande (S) détermine un nombre définissant numériquement au moins une paire de barres de préhension formée de deux barres de préhension (4, 4', 4', 4‴), de manière identique au nombre de rangées prédéfini, et que
- dans le cas d'un nombre de rangées n ≥ 2, le dispositif de commande (S) sélectionne une barre de préhension (7", 7"') commune déterminée pour une première paire de barres de préhension et une deuxième paire de barres de préhension, et définit la barre de préhension commune déterminée (7", 7‴) avec une première autre barre de préhension (4) en tant que première paire de barres de préhension, et définit la barre de préhension commune déterminée (7", 7"') avec une deuxième autre barre de préhension (4') en tant que deuxième paire de barres de préhension.

2. Procédé selon la revendication 1, dans lequel à chaque barre de préhension (4, 4', 4", 4") desdites au moins trois barres de préhension (4, 4', 4",4") est associé un propre actionneur (8, 8', 8", 8"'), dans lequel
- une barre de préhension (4, 4', 4", 4") ou plusieurs barres de préhension (4, 4', 4", 4") sont déplacées par leur propre actionneur (8, 8', 8", 8"') respectif pour recevoir par serrage ledit au moins un produit de détail (5, 5', 5") respectif, et/ou dans lequel
- une barre de préhension (4, 4', 4", 4") ou plusieurs barres de préhension (4, 4', 4", 4") sont déplacées par leur propre actionneur (8, 8', 8", 8"') respectif dans une position respective dans laquelle la barre de préhension (4, 4', 4", 4‴) respective forme avec une autre barre de préhension (4, 4', 4", 4"') une paire de barres de préhension respective.

3. Procédé selon la revendication 2, dans lequel les propres actionneurs (8, 8', 8", 8"') sont chacun conçus en tant que moteur linéaire.

4. Procédé selon la revendication 1, dans lequel respectivement un propre actionneur est associé à une paire de barres de préhension respective, lequel actionneur, pour recevoir ledit au moins un produit de détail (5, 5', 5") fourni respectif, transmet un mouvement d'avance aux deux barres de préhension (4, 4', 4", 4‴) respectives de la paire de barres de préhension respective via une chaîne respective et/ou une courroie (3) respective.

5. Procédé selon l'une quelconque des revendications 1 à 4, dans lequel ledit au moins un produit de détail (5, 5', 5") reçu respectif est manipulé au moyen d'une paire respective de barres de préhension formée de deux barres de préhension (4, 4', 4', 4"'), selon le nombre défini numériquement, et est ainsi amené dans une orientation relative par rapport à d'autres produits de détail (5, 5', 5") déjà manipulés, qui est adaptée à une couche palettisable à former à partir de produits de détail (5, 5', 5") manipulés.

6. Dispositif de préhension (1) destiné à manipuler des produits de détail (5, 5', 5"), comprenant
- au moins trois barres de préhension (4, 4', 4", 4"') dont une paire de barres de préhension respective formée de deux barres de préhension (4, 4', 4", 4‴) est conçue pour recevoir respectivement par serrage respectivement au moins un produit de détail (5, 5', 5"), et comprenant
- un dispositif de commande (S) auquel peuvent être fournies des informations relatives à une mise à disposition de produits de détail (5, 5', 5") prévue pour le dispositif de préhension (1), dans lequel ledit dispositif de commande (S) est conçu pour définir un nombre déterminé en tenant compte des informations, lequel nombre déterminé définit numériquement au moins une paire de barres de préhension formée de deux barres de préhension (4, 4', 4", 4‴), et dans lequel c'est par ledit dispositif de commande (S) que ladite au moins une paire de barres de préhension formée de deux barres de préhension (4, 4', 4", 4‴) peut être actionné selon le nombre défini numériquement pour recevoir par serrage ledit au moins un produit de détail (5, 5', 5") respectif, ledit dispositif de préhension (1) étant **caractérisé par le fait que**
- des produits de détail (5, 5', 5") peuvent être fournis au dispositif de préhension, au choix en une rangée (9) ou en plusieurs rangées parallèles (9, 9', 9"), et dans lequel des informations relatives au nombre de rangées peuvent être fournies au dispositif de commande (S), et dans lequel le dispositif de commande (S) est conçu pour déterminer le nombre déterminé de telle sorte que le nombre déterminé qui définit numériquement au moins une paire de barres de préhension formée de deux barres de préhension (4, 4', 4", 4‴), correspond au nombre de rangées respectif, et que
- le dispositif de commande (S) est conçu de telle sorte que, dans le cas d'un nombre de rangées n ≥ 2, le dispositif de commande (S) peut associer une barre de préhension (7", 7"') déterminée conjointement à une première paire de barres de préhension et à une deuxième paire de barres de préhension.

7. Dispositif de préhension selon la revendication 6, dans lequel à chaque barre de préhension (4, 4', 4", 4"') desdites au moins trois barres de préhension (4, 4', 4", 4"') est associé un propre actionneur (8, 8', 8", 8‴), dans lequel le propre actionneur (8, 8', 8", 8‴) respectif est en communication avec le dispositif de commande (S), et dans lequel
- un propre actionneur (8, 8', 8", 8‴) ou plusieurs propres actionneurs (8, 8', 8", 8‴) peuvent être commandés par ledit dispositif de commande (S) pour recevoir respectivement par serrage ledit au moins un produit de détail (5, 5', 5") respectif par l'intermédiaire de la barre de préhension (4, 4', 4", 4"') respective, et/ou dans lequel
- un propre actionneur (8, 8', 8", 8‴) ou plusieurs propres actionneurs (8, 8', 8", 8‴) peuvent être commandés par ledit dispositif de commande (S) pour déplacer la barre de préhension (4, 4', 4", 4‴) respective dans une position respective dans laquelle la barre de préhension (4, 4', 4", 4‴) respective forme avec une autre barre de préhension (4, 4', 4", 4"') une paire de barres de préhension respective.

8. Dispositif de préhension selon la revendication 7, dans lequel les propres actionneurs (8, 8', 8", 8"') sont chacun conçus en tant que moteur linéaire.

9. Dispositif de préhension selon la revendication 6, dans lequel un propre actionneur respectif est associé à une paire de barres de préhension respective, c'est par l'intermédiaire duquel propre actionneur respectif qu'une chaîne et/ou une courroie (3) peut être entraînée en circulation, et dans lequel les deux barres de préhension (4, 4', 4", 4‴) respectives de la paire de barres de préhension respective sont disposées sur la chaîne et/ou la courroie (3) de telle sorte que les deux barres de préhension (4, 4', 4", 4‴) respectives peuvent exercer un mouvement d'avance pour la réception par serrage dudit au moins un produit de détail (5, 5', 5") respectif lorsque la chaîne respective et/ou la courroie (3) respective est entraînée en circulation par le propre actionneur respectif.

10. Dispositif de préhension selon l'une quelconque des revendications 6 à 9, lequel est conçu pour manipuler et faire passer un produit de détail (5, 5', 5") respectif reçu par serrage, dans une orientation relative par rapport à d'autres produits de détail (5, 5', 5") déjà manipulés, laquelle orientation relative est adaptée à une couche palettisable à former à partir de produits de détail (5, 5', 5") manipulés.

11. Ligne de transport et de manipulation (10) pour des produits de détail, comprenant
- un dispositif de préhension (1) selon l'une quelconque des revendications 6 à 10 ainsi qu'
- un dispositif de transport horizontal (15) au moyen duquel des produits de détail (5, 5', 5") déplacés les uns derrière les autres en au moins une rangée (9, 9', 9") peuvent être fournis au dispositif de préhension (1), dans lequel le dispositif de préhension (1) peut être commandé par son dispositif de commande (S) pour faire tourner des produits de détail (5, 5', 5") saisis par serrage et/ou pour déplacer des produits de détail (5, 5', 5") saisis par serrage sur le dispositif de transport horizontal (15).
